# EUROPEAN PATENT APPLICATION

(11) **EP 1 411 738 A1**
(43) Date of publication of application: **21.04.2004**
(21) Application number: 02257150.9
(22) Date of filing: 15.10.2002
(51) Int. Cl.: H04Q 7/38, H04L 12/56, H04B 1/707

(54) **A telecommunications base station, and a method of detection by a base station of a sequence of data representing a request for call connection from a mobile**

(71) Applicant: LUCENT TECHNOLOGIES INC., Murray Hill, New Jersey 07974-0636 (US)
(72) Inventor: Iqbal, Jami, Swindon, Wiltshire SN1 2SF (GB); Mazlyn, Mustapha, Swindon, Wiltshire SN25 1WB (GB)
(74) Representative: Sarup, David Alexander

(57) **Abstract**

A method is provided of detection by a telecommunications base station (14) of a predetermined sequence of data representing a request for call connection from a mobile user terminal (18) on a channel shared by a plurality of mobile user terminals. The method comprises the following steps: Measuring (26) average received signal strength in the frequency band of the shared channel over a predetermined time interval to provide another signal (28), the received signal strength being dependent upon received interference; Adjusting (30) a sequence detection threshold dependent upon said another signal (28); Correlating (22) received signals on the shared channel to the expected predetermined sequence so as to provide a further signal; Determining whether the signal strength of the further signal is greater than the sequence detection threshold, and if so, the sequence is considered detected and so an acknowledgement is sent to the mobile user terminal.

## Description

### Technical Field

The present invention relates to a method of detection by a telecommunications base station of a predetermined sequence of data representing a request for call connection from a mobile user terminal on a channel shared by a plurality of mobile user terminals.
The present invention also relates to a method of setting up a call connection between a mobile user terminal and a base station comprising the method of detection.
The present invention also relates to a telecommunications base station comprising means to detect a predetermined sequence of data representing a request for call connection from a mobile user terminal on a channel shared by a plurality of mobile user terminals.

### Background of the Invention

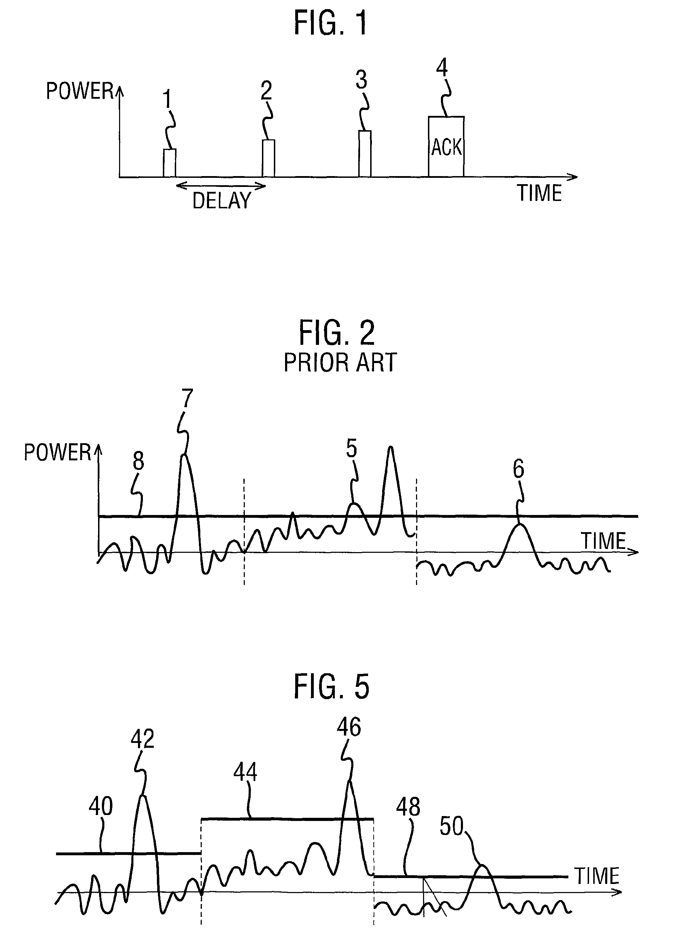

In a Universal Mobile Telecommunications System (UMTS) terrestrial radio access network (UTRAN) , mobile user terminal access the network through the random access channel (RACH). RACH is a contention-based channel where many users share the same resources by a contention procedure. When making a call, this procedure starts by a mobile user terminal transmitting a known sequence (preamble) repeatedly, each time at an increased power, until the preamble is acknowledged by the base station. This is shown schematically in Figure 1, where transmission power is shown on the y-axis and time on the x-axis. As shown in Figure 1, an initial sequence (1) is sent, if there is no response received from the base station, after a delay the sequence is resent (2) with increased power. If still no response is received, the sequence is sent again (3) after another delay with further increased power, and so on, until the response (ACK (acknowledgement),4) is received. This procedure is known as power ramping.

In order for the base station to detect the preamble sequence, the user terminal needs to transmit the preamble sequence with enough power that it overcomes the interference (i.e radio signal noise) at the base station. The base station correlates the signal received on the RACH from the mobile user terminal stored expected preamble sequences in order to decide if a user terminal is attempting to access the network. If the output of its correlator exceeds a given threshold value then the base station decides that a preamble is detected. Once the preamble is detected, the base station sends a positive acquisition indicator (ACK, 4) as shown in Figure 1 and then the radio resources (e.g. bandwidth) are made available for the user to get access to the network.
The base station will thus only detect the presence of a preamble if the output of the preamble detection exceeds a predefined threshold (the RACH preamble detection threshold). This threshold is set based on the expected interference. As shown in Figure 2, if the interference value becomes larger than expected then the output of the correlator may provide a false detection of a non-existent preamble (5). If the interference level is lower than the expected interference level, then the mobile user terminals may need to transmit more power than necessary in order to get their preamble detected (6). For comparison a correct preamble detection is denoted 7 in Figure 2 the threshold being shown by the line denoted 8.
In 3GPP standards (Release 99) TS 25.433, the RACH preamble detection threshold is set when the RACH channel is configured on the base station (at power-on or after re-start) or by subsequently deleting and setting up a new RACH having a new threshold. The RACH preamble threshold value for each cell can be manually configured through an Operation and maintenance centre, but the new threshold will only take effect at the base station at power-on or at re-start.

### Summary of the Invention

The present invention provides a method of detection by a telecommunications base station of a predetermined sequence of data representing a request for call connection from a mobile user terminal on a channel shared by a plurality of mobile user terminals, comprising steps of :
(a) measuring average received signal strength in the frequency band of the shared channel over a predetermined time interval to provide another signal, the received signal strength being dependent upon received interference,
(b) adjusting a sequence detection threshold dependent upon said another signal,
(c) correlating received signals on the shared channel to the expected predetermined sequence so as to provide a further signal,
(d) determining whether the signal strength of the further signal is greater than the sequence detection threshold, and if so, the sequence is considered detected and so an acknowledgement is sent to the mobile user terminal.

Preferred embodiments provide adaptive threshold setting for RACH preamble detection. A variable threshold value is used for the RACH preamble detection. The threshold is adaptively changed according to the variations in the level of interference. Thus a cell-specific dynamic threshold is used for RACH preamble detection. In consequence, it is possible to use radio resources more efficiently. Other advantages include that access to the network is improved by increasing the preamble detection probability and reducing the false alarm rate.

Preferably the measuring and adjusting steps are periodically repeated.
Preferably the shared channel is a Random Access Channel (RACH), the predetermined sequence is a RACH preamble sequence, and the steps are made in accordance with Universal Mobile Telecommunications System (UMTS) standards.

The present invention also provides a method of setting up a call connection between a mobile user terminal and a base station comprising the method of detection by the telecommunications base station of a predetermined sequence.
Preferably the predetermined sequence is sent repeatedly by the mobile user terminal with increasing power until an acknowledgement is received.

The present invention also provides a telecommunications base station comprising means to detect a predetermined sequence of data representing a request for call connection from a mobile user terminal on a channel shared by a plurality of mobile user terminals, the means to detect comprising:
measuring means operative to determine average received signal strength in the frequency band of the shared channel over a predetermined time interval so as to provide another signal, the received signal strength being dependent upon received interference,
threshold adjustment means operative to adjust a sequence detection threshold held in a sequence detection threshold store dependent upon said further signal,
a correlator operative to correlate received signals on the shared channel to the expected predetermined sequence so as to provide a further signal,
determining means operative to determine whether the signal strength of the further signal is greater than the sequence detection threshold, and if so, the sequence is considered detected and so an acknowledging means of the base station sends an acknowledgement.

Preferably, in use, the acknowledging means sends the acknowledgement as a step in establishing a call connection between the base station and the mobile user terminal.
Preferably the measurement means and threshold adjustment means operate periodically and repeatedly.
Preferably the shared channel is a Random Access Channel (RACH), the predetermined sequence is a RACH preamble sequence, and the base station is in accordance with Universal Mobile Telecommunications System (UMTS) standards.

The present invention also provides a telecommunications network comprising one or more of the base stations.

### Brief Description of the Drawings

A preferred embodiment of the present invention will now be described by way of example and with reference to the drawings, in which:
Figure 1 is a diagram illustrating detection of a RACH Preamble sequence,
Figure 2 is a diagram illustrating problems associated with fixed threshold value (prior art),
Figure 3 is a diagram illustrating a preferred network for mobile telecommunications,
Figure 4 is a diagram illustrating a base station of the network shown in Figure 3, and
Figure 5 is a diagram illustrating use of a variable threshold depending on interference level.

### Detailed Description

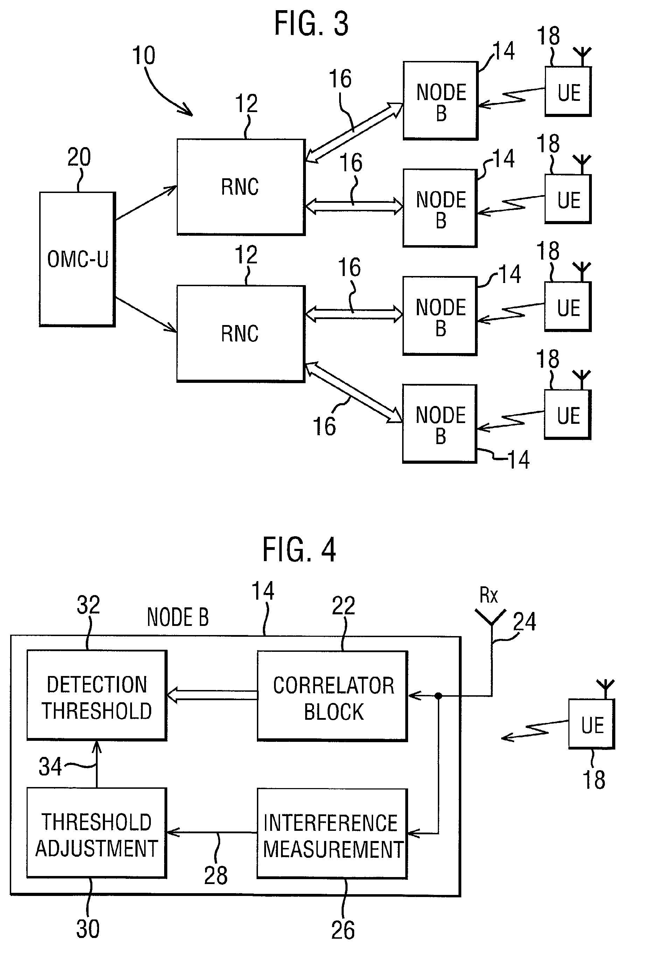

As shown in Figure 3, a UMTS mobile telecommunications system 10 includes radio network controllers 12 (often denoted RNC, two of which is shown in Figure 1 for simplicity) each connected to base stations 14 (four of which is shown in Figure 1 for simplicity, Node B in UMTS terminology) by a respective interface 16 known as an IuB interface. Each base station 14 has an associated cell or cells (not shown) i.e area(s)of radio coverage such that active mobile user terminals 18 (user equipment, UE, in UMTS terminology) within that area are in call connection with the base station 14 under the control of the associated radio network controller 12 . The base stations and radio network controllers 12 are configured and controlled via an Operation and Maintenance Centre (OMC-U) 20
A mobile user terminal 18 accesses the network 10 via the random access channel (RACH). As mentioned previously RACH is a contention-based channel where many users share the same resources by a contention procedure. When setting up a call, this procedure starts by a mobile user terminal 18 transmitting a known data sequence (preamble) in known manner repeatedly, each time at an increased power, until the preamble is acknowledged by the base station. This procedure is known as power ramping.

In order for the base station 14 to detect the preamble sequence, the user terminal 18 needs to transmit the preamble sequence with enough power that it overcomes the interference (i.e noise) at the base station 14. As shown in Figure 4, the base station 14 includes a correlator 22 which correlates the signal received (via antenna 24) on the RACH channel from the mobile user terminal 18 with expected preamble sequences stored within the correlator 22 in order to decide if a user terminal 18 is attempting to access the network 10. If the output of the correlator 22 exceeds a given threshold value as recorded in a detection threshold store 32 then the base station 14 decides that a preamble is detected. Once the preamble is detected, the base station 14 sends a positive acquisition indicator (ACK) and then the radio resources (e.g. bandwidth) are made available for the mobile user terminal 18 to get its call connection to the base station 14 (and hence the network 10).
The base station 14 dynamically changes the threshold level depending on measurement of received signal strength in the bandwidth of the RACH channel averaged over a predetermined time interval (i.e. a sampling time window). As the preamble is short in time duration (as shown in Figure 1) this measure is unlikely to include a contribution due to a preamble sequence so is most likely a direct measure of the average uplink received interference in that time interval. Alternatively if the measure includes a contribution due to a preamble sequence, it is assumed that that contribution is negligible such that the measure is nevertheless a good estimate of average uplink interference level in that time interval.
The base station (Node B) 14 thus includes a measurement block 26 connected to the antenna 24 which measures the received signal strength as explained above so as to provide value taken as representative of uplink (i.e receive) interference level. A signal 28 representative of the value is provided to a threshold adjuster 30 which sends a control signal 34 to the detection threshold store 32 so as to adjusts the preamble detection threshold dependent upon the signal 28.
Measurements of signal strength as described in the previous paragraph are made periodically and repeatedly such that a series of values are provided with consequential periodic adjustments of the preamble detection threshold.
A variable preamble detection threshold is thus implemented that depends on the interference level, i.e. if the interference level is high, then the threshold is set high and if the interference level is low, the threshold is set to a low value. For example, if the interference level increase is by X dB then the threshold detection level is increased by X dB also.

The interference level changes depending on, for example, the number of user terminals active in the cell. The more active user terminals in the cell, the higher the interference and vice versa. Therefore, during peak hours, the interference level will be high. At off-peak hours (e.g. 3am), the interference level will be lower.
The variable threshold improves the performance of RACH preamble detection by reducing the number of false preambles detected and increasing the number of preambles detected. This is shown in Figure 5, where a first preamble 42 is detected using a first preamble threshold level 40. Also shown is a second preamble 46 detected with an increased threshold 44 because of an increased interference level. Also shown is a.third preamble 50 detected with a reduced threshold 48 because of a reduced interference level.

## Claims

1. A method of detection by a telecommunications base station (14) of a predetermined sequence of data representing a request for call connection from a mobile user terminal (18) on a channel shared by a plurality of mobile user terminals, comprising steps of :
measuring (26) average received signal strength in the frequency band of the shared channel over a predetermined time interval to provide another signal (28), the received signal strength being dependent upon received interference,
adjusting (30) a sequence detection threshold dependent upon said another signal (28),
correlating (22) received signals on the shared channel to the expected predetermined sequence so as to provide a further signal,
determining whether the signal strength of the further signal is greater than the sequence detection threshold, and if so, the sequence is considered detected and so an acknowledgement is sent to the mobile user terminal.

2. A method of detection according to claim 1, in which the measuring and adjusting steps are periodically repeated.

3. A method of detection according to claim 1 or claim 2, in which the shared channel is a Random Access Channel (RACH), the predetermined sequence is a RACH preamble sequence, and the steps are made in accordance with Universal Mobile Telecommunications System (UMTS) standards.

4. A method of setting up a call connection between a mobile user terminal (18) and a base station (14) comprising the method of detection by the telecommunications base station (14) of a predetermined sequence according to any preceding claim.

5. A method of setting up a call connection according to claim 4, in which the predetermined sequence is sent repeatedly by the mobile user terminal (18) with increasing power until an acknowledgement is received.

6. A telecommunications base station (14) comprising means to detect a predetermined sequence of data representing a request for call connection from a mobile user terminal on a channel shared by a plurality of mobile user terminals, the means to detect comprising:
measuring means (26) operative to determine average received signal strength in the frequency band of the shared channel over a predetermined time interval so as to provide another signal (28), the received signal strength being dependent upon received interference,
threshold adjustment means (30) operative to adjust a sequence detection threshold held in a sequence detection threshold store (34) dependent upon said another signal (28),
a correlator (22) operative to correlate received signals on the shared channel to the expected predetermined sequence so as to provide a further signal,
determining means operative to determine whether the signal strength of the further signal is greater than the sequence detection threshold, and if so, the sequence is considered detected and so an acknowledging means of the base station sends an acknowledgement.

7. A telecommunications base station according to claim 6, in which , in use, the acknowledging means sends the acknowledgement as a step in establishing a call connection between the base station and the mobile user terminal.

8. A telecommunications base station according to claim 6 or claim 7, in which the measurement means (26) and threshold adjustment means (30) operate periodically and repeatedly.

9. A telecommunications base station according to any of claims 6 to 8. in which the shared channel is a Random Access Channel (RACH), the predetermined sequence is a RACH preamble sequence, and the base station (14) is in accordance with Universal Mobile Telecommunications System (UMTS) standards.

10. A telecommunications network (10) comprising one or more base stations (14) according to any of claims 6 to 9.
